Europäisches Patentamt

European Patent Office

Office européen des brevets

(19)

(11)  **EP 0 909 961 B1**

(12)  **FASCICULE DE BREVET EUROPEEN**

(45) Date de publication et mention
de la délivrance du brevet:
**25.06.2003  Bulletin 2003/26**

(51) Int Cl.⁷: **G01V 1/42**

(21) Numéro de dépôt: **98402364.8**

(22) Date de dépôt: **25.09.1998**

(54) **Procédé de séparation d'ondes en sismique de puits pour des acquisitions de type à déport croissant**

Welletrennungverfahren für Borlochseismischen Wellen für Datenerfassung mit zunemenden Versatz

Wave separation procedure for borehole seismics with walk away acquisitions

(84) Etats contractants désignés:
**DE FR GB IT NL**

(30) Priorité: **09.10.1997  FR 9712622**

(43) Date de publication de la demande:
**21.04.1999  Bulletin 1999/16**

(73) Titulaire: **Elf Exploration Production
92400 Courbevoie (FR)**

(72) Inventeur: **Boelle, Jean-Luc
64230 Lescar (FR)**

(74) Mandataire: **Levy, David et al
c/o S.A. FEDIT-LORIOT & AUTRES
CONSEILS EN PROPRIETE INDUSTRIELLE
38, Avenue Hoche
75008 Paris (FR)**

(56) Documents cités:
**EP-A- 0 053 525          US-A- 4 779 238
US-A- 5 142 501**

- **MARI J L ET AL: "TRACE PAIR FILTERING FOR SEPARATION OF UPGOING AND DOWNGOING WAVES IN VERTICAL SEISMIC PROFILE" REVUE DE L'INSTITUT FRANCAIS DU PETROLE, vol. 45, no. 2, 1 mars 1990, pages 181-203, XP000147465 FRANCE**
- **DATABASE INSPEC INSTITUTE OF ELECTRICAL ENGINEERS, STEVENAGE, GB Inspec No. 3032671, DAURES R ET AL: "Applying three-component records in wave field separation" XP002071456 & GEOPHYSICAL TRANSACTIONS, JULY 1987, HUNGARY, vol. 33, no. 1, pages 23-39, ISSN 0016-7177**
- **SEEMAN ET AL.: "Vertical seismic profiling:separation of upgoing and downgoing waves in a stratified medium" GEOPHYSICS, vol. 48, no. 5, mai 1983, pages 555-568, XP002071454 TULSA, OKLAHOMA,USA**
- **ESMERSOY: "Inversion of P and SV waves from multicomponent offset vertical seismic profiles" GEOPHYSICS, vol. 55, no. 1, janvier 1990, pages 39-50, XP002071455 ULSA, OKLAHOMA, USA**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne une méthode pour la séparation des ondes élastiques reçues et enregistrées après propagation dans un milieu et, plus particulièrement, le traitement des signaux enregistrés lors d'une acquisition effectuée par émission d'ondes élastiques en plusieurs positions d'un ou plusieurs émetteurs disposés en surface du milieu, le ou les récepteurs étant fixe(s) dans un puits foré dans ledit milieu pendant toute la série d'émission, le ou les récepteurs étant ensuite déplacé(s) à une autre position dans le puits pour une autre série d'émissions. Une telle acquisition est usuellement désignée par le terme anglais "walkaway", c'est-à-dire que l'émission est effectuée à déport croissant d'une émission à la suivante.

En sismique de puits terrestre et/ou marine, on utilise plusieurs émetteurs séparés par une distance constante ou non et disposés en surface du milieu à explorer le long d'une ligne d'acquisition. Un outil de réception est descendu dans le puits dont la direction peut être verticale ou déviée. L'outil comprend généralement plusieurs récepteurs séparés par une distance constante ou non qui est généralement différente de la distance constante ou non séparant deux émetteurs ou sources consécutifs. Chaque récepteur comprend trois capteurs ou géophones qui sont orientés suivant trois directions différentes généralement orthogonales, une des directions étant déterminée pour disposer d'un axe de référence. L'axe de référence peut être non vertical ou vertical si on monte ces capteurs sur un système à cardan. Dans les deux cas, l'axe de référence V des capteurs est perpendiculaire au plan défini par les deux autres directions $H_1$ et $H_2$ dont les positions ne sont pas connues généralement. Les axes V, $H_1$, $H_2$ constituent un premier système d'axes.

Les signaux représentatifs des ondes se propageant dans le milieu sont enregistrés en fonction du temps sous forme de traces. Les ondes qui se propagent dans le milieu sont principalement les ondes P montantes ou descendantes (ondes directes) et les ondes S.

Les traces enregistrées selon les axes V, $H_1$', $H_2$ peuvent être regroupées en collections de traces à émetteur commun par exemple.

Un traitement actuel des traces consiste à définir un deuxième système d'axes R, N, T, dans lequel l'axe R est situé dans le plan d'énergie maximum. Une telle transformation est effectuée à l'aide de ce qu'on appelle usuellement une double rotation, une rotation d'angle $\Phi_H$ étant effectuée autour de l'axe V et la deuxième rotation d'angle $\Phi_V$ étant effectuée autour d'une direction dénommée $H_{min}$ qui est perpendiculaire à un vecteur $H_{max}$ qui est la projection de l'onde directe descendante dans le plan défini par $H_1$ et $H_2$, l'angle $\Phi_H$ étant l'angle que font entre eux $H_1$ et $H_{max}$.

L'angle $\Phi_V$ est l'angle formé par les axes V et R. Cette transformation du premier système d'axes V, $H_1$, $H_2$ en un deuxième système d'axes R, N, T est effectuée notamment à l'aide d'un logiciel bien connu des spécialistes et dénommé SEISLINK, commercialisé par la société WESTERN.

On peut produire des traces dans le système d'axes R, N, T en projetant les composantes des traces repérées suivant les axes V, $H_1$, $H_2$ et constituer des collections de traces à émetteur commun repérées en fonction de la profondeur z et du temps t, à partir d'au moins les traces suivant l'axe R (ou traces R).

Les collections de traces, par exemple collections V, R ou N, sont ensuite traitées pour séparer les différents types d'ondes, surtout les ondes P descendantes et montantes et les ondes S montantes et descendantes.

Une technique de séparation desdites ondes peut être mise en oeuvre en utilisant le logiciel SEPAR de la Compagnie Générale de Géophysique (CGG). Toutefois, cela nécessite de connaître les vitesses apparentes des types d'ondes recherchés. Généralement, ces vitesses apparentes sont déterminées à l'aide d'un pointé manuel sur les traces enregistrées. Les inconvénients de cette technique résident dans l'imprécision inhérente aux pointés manuels et parfois à l'impossibilité de discerner les types d'ondes directement sur les traces enregistrées. De plus, le coût du traitement est élevé pour des résultats peu précis.

Une autre technique préconisée par la société SCHLUMBERGER consiste à utiliser un logiciel qui est capable d'analyser les collections de traces à émetteur commun et d'en déduire les vitesses apparentes des ondes à séparer lorsqu'elles existent. Un inconvénient de cette technique réside dans son instabilité et surtout dans le fait que la séparation des ondes est peu efficace en raison du faible nombre de capteurs utilisé.

Ces techniques de séparation d'ondes sont décrites respectivement dans les articles suivants :

B. SEEMAN and L. HOROWICZ : "Vertical seismic profiling : Separation of upgoing and downgoing acoustic waves in a stratified medium. GEOPHYSICS, Vol. 48, No. 5 (May 1983), p. 555-568 ;
C. ESMERSOY : "Inversion of P and SV waves from multicomponent offset vertical seismic profiles", GEOPHYSICS, Vol. 55, No. 1, (January 1990), p. 39-50.

La présente invention a pour objet une nouvelle méthode de séparation des ondes élastiques, dans laquelle on met en oeuvre un traitement particulier des collections de traces qui permet de remédier aux inconvénients des méthodes antérieures telles que rappelées succinctement ci-dessus.

La méthode selon l'invention pour la séparation des ondes se propageant dans un milieu est du type consistant à :

- générer des ondes dans le milieu successivement à partir de plusieurs positions d'au moins un émetteur et situées à la surface dudit milieu,
- recevoir lesdites ondes sur au moins un récepteur susceptible d'occuper successivement au moins deux positions dans un puits foré dans le milieu, chaque récepteur comprenant trois capteurs orientés dans un premier système d'axes (V, $H_1$, $H_2$), un desdits axes (V) étant orienté suivant une direction déterminée, chaque capteur délivrant un signal qui est enregistré en fonction du temps sous forme d'une trace qui est repérée par les positions du couple émetteur-récepteur ayant produit ladite trace,
- constituer des collections C de traces à émetteur commun (z, t) à partir d'au moins un ensemble de traces V, $H_1$, $H_2$,

et elle est caractérisée en ce qu'elle consiste, en outre, à

a) extraire les premières arrivées C signal d'au moins une des collections de traces C,
b) réaliser à partir de ladite collection de traces C une collection de traces C résiduelles dans laquelle chaque trace résiduelle est la différence entre la trace C et l'estimation C signal,
c) sélectionner dans la collection de traces C résiduelles une trace pivot située à une profondeur z,
d) faire passer une droite de pente p variable en chaque point échantillonné de la trace pivot,
e) sommer le long de ladite droite, pour chaque valeur de p, les amplitudes des événements sismiques situés aux intersections des traces avec ladite droite,
f) reporter les sommes amplitude pour les temps et pente correspondants dans un domaine (τ, p) dans lequel p représente les valeurs de ladite pente variant entre deux limites extrêmes et τ le temps,
g) réaliser un sismogramme synthétique à partir des données du domaine (τ, p),
h) comparer le sismogramme synthétique à la collection émetteur commun de traces C résiduelles,
i) procéder à des itérations jusqu'à ce que le sismogramme synthétique soit acceptable par rapport aux données initiales de ladite collection émetteur commun des traces C résiduelles.

Selon une caractéristique avantageuse la méthode consiste, en outre, à

- définir pour chaque couple de positions émetteur-récepteur un deuxième système d'axes (R, N, T) qui est calculé, par des moyens connus, à partir des composantes suivant les trois axes V, $H_1$, $H_2$, du vecteur déplacement correspondant à la première arrivée de l'onde d'intérêt et de la projection $H_{max}$ dudit vecteur déplacement dans le plan $H_1$, $H_2$, l'axe R étant situé dans le plan V, $H_{max}$, l'axe N étant perpendiculaire à l'axe R et situé dans le plan V, $H_{max}$ et l'axe T étant perpendiculaire au plan R, N,
- produire des traces dans le système d'axes R, N, T en projetant les composantes des traces repérées suivant les axes V, $H_1$, $H_2$,

et à constituer les collections de traces (C) à émetteur commun (z, t) à partir des traces R,

- extraire les premières arrivées R signal de la collection de traces R,
- réaliser à partir de la collection de traces R une collection de traces R résiduelles dans laquelle chaque trace résiduelle est la différence entre la trace R et l'estimation R signal,
- sélectionner dans la collection de traces R résiduelles une trace pivot située à une profondeur z,
- effectuer les étapes d) à i) sur les traces R résiduelles.

Selon une autre caractéristique, la méthode consiste, en outre, à :

- définir un troisième système d'axes (X, Y, Z), fixe géographiquement,
- déterminer dans le système d'axes (X, Y, Z) la déviation (Ψ) et l'azimut (θ) du puits,
- aligner l'axe V du premier système d'axes (V, $H_1$, $H_2$) avec la direction du puits,
- définir un vecteur $h_1$ perpendiculaire aux axes V et Z et contenu dans le plan $H_1$, $H_2$,
- déterminer l'angle δ entre le vecteur $h_1$ et l'axe $H_1$.

Selon une autre caractéristique, les composantes C ou R résiduelles, ainsi que les composantes $H_1$ et $H_2$ ou N et T sont projetées dans le système fixe (X, Y, Z) pour constituer des composantes résiduelles $X_r$ et $Y_r$, $Z_r$, sur les axes X, Y, Z, la décomposition (τ, p) étant réalisée à partir des composantes des traces $X_r$ et $Y_r$, $Z_r$.

Selon une autre caractéristique, on calcule, par des moyens connus, pour chaque couple émetteur-récepteur et dans les domaines (τ, p), un attribut angulaire polarisation ζ et un attribut angulaire azimut γ.

Lorsque l'onde d'intérêt est l'onde P, on utilise les attributs polarisation $\zeta$, azimut $\gamma$, angle de déviation $\psi$ et azimut $\theta$ du puits ainsi que la pente p pour calculer l'attribut vitesse $V_P$ des ondes P dans le milieu.

A partir des attributs polarisation $\zeta$ et vitesse $V_P$, on calcule l'attribut lenteur apparente $p_z$ par rapport à l'axe Z d'un événement sismique correspondant à des valeurs $\tau$ et p dans le domaine ($\tau$, p).

Les attributs $p_z$ et $V_P$ peuvent être utilisés pour opérer une sélection (mute) des événements à conserver dans le domaine ($\tau$, p), lesdits événements étant notamment ceux liés aux ondes P montantes.

D'autres avantages et caractéristiques apparaîtront plus clairement à la lecture de la description de la méthode selon l'invention, ainsi que des dessins annexés sur lesquels :

- la figure 1 est une représentation schématique du dispositif d'émission et de réception dans un milieu,
- la figure 2 est une représentation schématique des directions de réception V, $H_1$, $H_2$ des capteurs d'un récepteur du dispositif de réception,
- la figure 3 est une représentation schématique du repérage du puits de la figure 1 dans un système d'axes X, Y, Z fixe géographiquement,
- les figures 4 et 5 sont des représentations des angles $\Phi_H$ et $\Phi_V$ des rotations appliqués au système V, $H_1$, $H_2$ pour une transformation dans un système d'axes R, N, T,

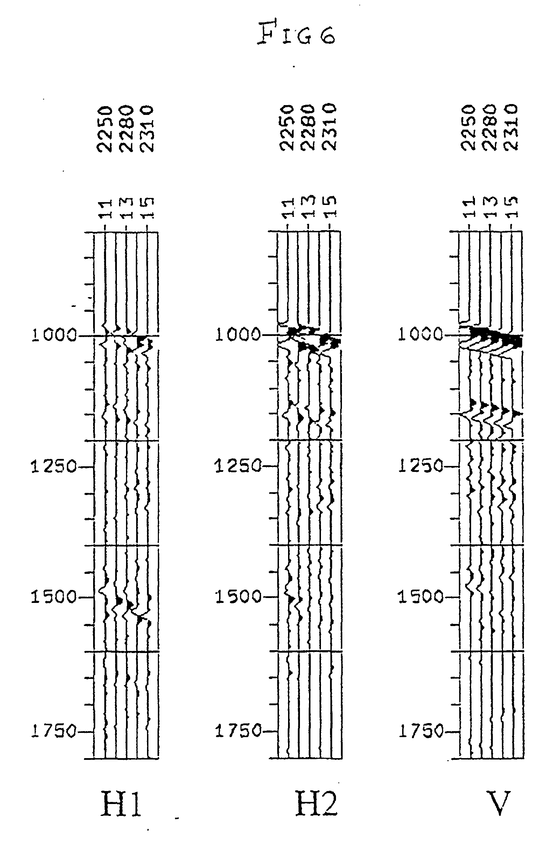

- la figure 6 représente schématiquement des collections de traces enregistrées sur les récepteurs suivant les axes V, $H_1$, $H_2$,
- la figure 7 est une représentation schématique des collections de traces suivant les axes R, N, T,
- la figure 8 est une représentation schématique des collections de traces R, R signal et R résiduelles,
- la figure 9 est une représentation schématique des projections des collections de traces R résiduelles, N et T sur les axes fixes géographiquement X, Y, Z,
- la figure 10 est une représentation schématique de la décomposition d'une collection de traces (z, t) à émetteur commun dans un domaine ($\tau$, p),
- la figure 11 est une représentation schématique de la décomposition dans le domaine ($\tau$, p) des collections de traces X, Y, Z de la figure 9,
- la figure 12 représente schématiquement, dans le système d'axes X, Y, Z, la synthèse de la trace pivot de la figure 10, représentative de l'estimation du champ d'onde P montante.

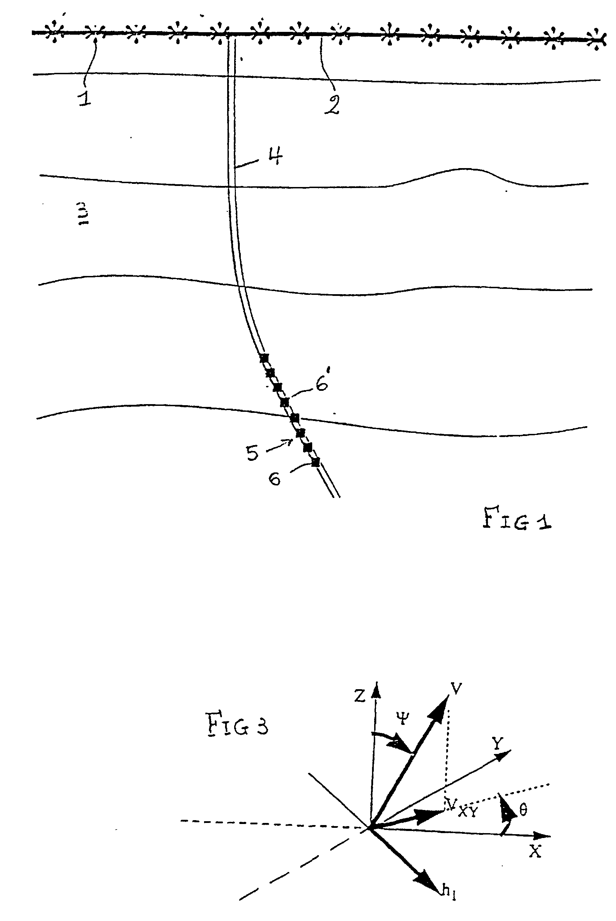

Selon la méthode de la présente invention, on utilise (figure 1) une ou plusieurs sources sismiques ou émetteurs 1 qui sont disposés à la surface 2 d'un milieu 3 dans lequel un puits 4 a été foré. Le puits 4 peut être vertical ou dévié comme sur la figure 1. Dans le puits dévié 4 est disposé un dispositif de réception 5 qui peut occuper au moins deux positions dans le puits. Le dispositif de réception peut comprendre un ou plusieurs récepteurs, par exemple quatre récepteurs 6 constitués chacun par trois capteurs dont les directions sont suivant un trièdre rectangle formé par trois axes, V, $H_1$, $H_2$, l'axe V étant dirigé selon l'axe 7 du puits 4, les autres axes $H_1$ et $H_2$ étant situés dans un plan perpendiculaire à l'axe V (figure 2).

La distance séparant deux positions consécutives de l'émetteur 1 est généralement constante et par exemple égale à 25 m, alors que la distance séparant deux récepteurs consécutifs 6 est généralement constante et par exemple égale à 10 m.

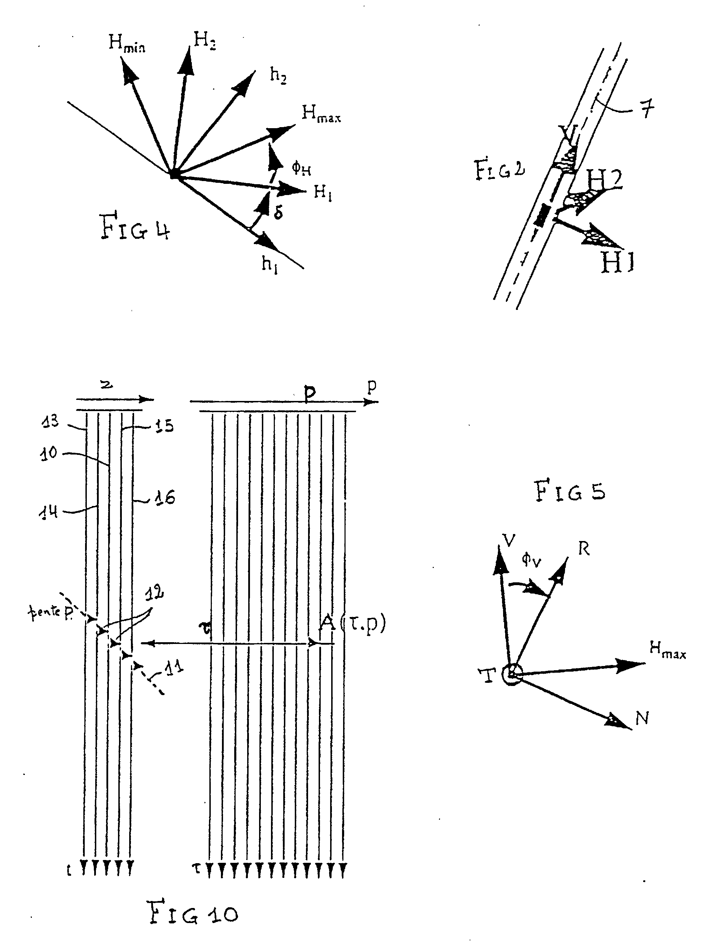

Selon la présente invention, on détermine la déviation $\Psi$ et l'azimut $\theta$ de l'axe 7 du puits 4 dans un système d'axes orthogonaux X, Y, Z, fixe géographiquement, l'axe Z étant vertical (figure 3). Les coordonnées du vecteur V sont données en fonction de $\Psi$ et $\theta$ par les formules suivantes, dans le système d'axes X, Y, Z :

$$V \begin{cases} \cos\theta \, \sin\psi \\ \sin\theta \, \sin\psi \\ \cos\psi \end{cases}$$

les angles $\psi$ et $\theta$ étant compris respectivement dans les intervalles [0, $\pi/2$] et [0, $2\pi$].

Un nouveau vecteur $h_1$ est défini pour être perpendiculaire à la fois au vecteur V et à l'axe Z, et dont les coordonnées sont données par les formules suivantes, dans le système d'axes X, Y, Z :

$$h_1 \begin{cases} \sin\theta \\ -\cos\theta \\ 0 \end{cases}$$

Le vecteur $h_1$ est alors contenu dans le plan $H_1$, $H_2$.

De la même manière, on définit un vecteur $h_2$ situé dans le plan $H_1$, $H_2$ et perpendiculaire à $h_1$. Les coordonnées du vecteur $h_2$ dans le système d'axes X, Y, Z sont données par les formules suivantes :

$$h_2 \begin{cases} \cos\psi \cos\theta \\ \cos\psi \sin\theta \\ -\sin\psi \end{cases}$$

Les positions des axes $H_1$ et $H_2$, par rapport aux vecteurs $h_1$ et $h_2$ sont données par les équations suivantes :

$$H_1 \begin{cases} \sin\theta \cos\delta + \cos\psi \cos\theta \sin\delta \\ -\cos\theta \cos\delta + \cos\psi \sin\theta \sin\delta \\ -\sin\psi \sin\delta \end{cases}$$

et

$$H_2 \begin{cases} -\sin\theta \sin\delta + \cos\psi \cos\theta \cos\delta \\ \cos\theta \sin\delta + \cos\psi \sin\theta \cos\delta \\ -\sin\psi \cos\delta \end{cases}$$

Dans ces formules, $\delta$ représente l'angle formé par l'axe $H_1$ et le vecteur $h_1$ (figure 4).

L'émetteur 1 occupe successivement plusieurs positions sur la surface 2, lesdites positions de l'émetteur 1 étant situées suivant des configurations géométriques données, rectangulaires ou circulaires concentriques autour du puits foré 4.

Le déport entre l'émetteur 1 et le dispositif de réception 5 croît d'une émission à l'autre, de manière à effectuer une acquisition du type walkaway. L'émetteur 1 génère des ondes élastiques qui se propagent dans le milieu 3 et qui sont reçues et enregistrées sur chacun des capteurs de chaque récepteur 6 du dispositif de réception 5, les ondes étant enregistrées en fonction du temps t sous la forme de traces dans les directions V, $H_1$ et $H_2$. Ainsi, à chaque émission, on obtient un ensemble de traces qui sont repérées par la profondeur z du récepteur 6 et la position de l'émetteur 1. Lorsque l'enregistrement correspondant à une émission est terminé, on procède à une autre émission pour une autre position de l'émetteur et ainsi de suite pour toutes les positions prédéterminées des points d'émission. Après quoi, on déplace le dispositif de réception 5 à une autre profondeur dans le puits 4, ainsi que cela est représenté sur la figure 1 sur laquelle le récepteur inférieur 6 vient occuper la position 6'.

Une autre série d'émissions et d'enregistrements est alors effectuée pour cette autre position du dispositif de réception 5.

Chaque trace enregistrée sur chaque capteur, c'est-à-dire dans les directions V, $H_1$, $H_2$, est repérée par les positions du couple émetteur 1-récepteur 6 ayant produit ladite trace.

A partir d'au moins un ensemble de traces enregistrées dans les directions V, $H_1$, $H_2$, on constitue des collections de traces C à émetteur commun (z, t). Le traitement consiste d'abord à extraire les premières arrivées C signal d'au moins une des collections de traces C et à réaliser une collection de traces C résiduelles à partir de ladite collection de traces C, chaque trace résiduelle étant la différence entre la trace C et l'estimation C signal. Une trace pivot, située à une profondeur z est sélectionnée dans la collection de traces C résiduelles, puis on fait passer une droite de pente p qui est variable en chaque point échantillonné de la trace pivot. Pour chaque valeur de p, on effectue une sommation des amplitudes des événements sismiques qui sont situés aux intersections des traces avec ladite droite. Les sommes amplitude pour les temps et pente correspondants sont reportées dans un domaine $(\tau, p)$ dans lequel $\tau$ est le temps et p représente les valeurs de ladite pente variant entre deux limites extrêmes. A partir des données dans le domaine $(\tau, p)$, un sismogramme synthétique est réalisé. Le sismogramme synthétique est ensuite comparé à la collection à émetteur commun de traces C résiduelles. Enfin, des itérations sont effectuées jusqu'à ce que le sismogramme synthétique soit acceptable par rapport aux données initiales de la collection émetteur commun des traces C résiduelles.

Dans une forme préférée de réalisation de l'invention, le traitement consiste à définir, pour chaque couple de positions émetteur-récepteur, un deuxième système d'axes orthogonaux R, N, T qui est calculé à partir des composantes suivant les trois axes V, $H_1$, $H_2$ du vecteur déplacement correspondant à la première arrivée de l'onde d'intérêt, par exemple l'onde P, et de la projection $H_{max}$ du vecteur déplacement dans le plan $H_1$, $H_2$. La majeure partie de l'énergie associée à l'onde d'intérêt P ou onde directe se situe sur cet axe R qui correspond audit vecteur déplacement.

L'axe N est perpendiculaire à l'axe R et il est situé dans le plan V, $H_{max}$ et l'axe T est perpendiculaire au plan R, N (figure 5).

Le passage du système d'axes V, $H_1$, $H_2$ au système d'axes R, N, T est effectué par une rotation d'angle $\Phi_H$ autour de l'axe V et une autre rotation d'angle $\Phi_V$ autour d'un vecteur $H_{min}$ qui est perpendiculaire au vecteur $H_{max}$. Les angles $\Phi_H$ et $\Phi_V$ sont calculés à partir des trois composantes V, $H_1$, $H_2$ présentes dans une fenêtre temps située autour de l'arrivée directe. Les angles $\Phi_H$ et $\Phi_V$ peuvent être calculés en utilisant par exemple le logiciel SEISLINK (version 1996) commercialisé par la société WESTERN.

Pour chaque couple émetteur-récepteur, les données initiales V, $H_1$, $H_2$ fournies par les capteurs sont projetées dans le deuxième système d'axes R, N, T. Les composantes selon les axes R, N, T s'expriment à l'aide des équations suivantes :

$$R = V \cos \Phi_V + (H_1 \cos \Phi_H + H_2 \sin \Phi_H) \sin \Phi_V$$

$$N = -V \cos \Phi_V$$

$$T = -H_1 \sin \Phi_H \; H_2 \cos \Phi_H$$

L'angle $\delta$ est calculé pour chaque position de réception, à l'aide d'un processus d'inversion qui utilise les angles $\Phi_H$, les positions relatives de l'émetteur par rapport au récepteur, la déviation $\psi$ et l'azimut $\theta$ du puits. La valeur de l'angle $\delta$ est calculée par minimisation de la fonction suivante :

$$F = \sum_{sources} \sin \Phi \cos(\delta + \Phi_H) \sin(\theta - \alpha) + \sin(\delta + \Phi_H)\left[\cos(\theta - \alpha)\sin \Phi \cos \Psi - \cos \Phi \sin \Psi\right]$$

dans laquelle $\alpha$ représente l'angle formé par le plan contenant le couple émetteur-récepteur et l'axe X.

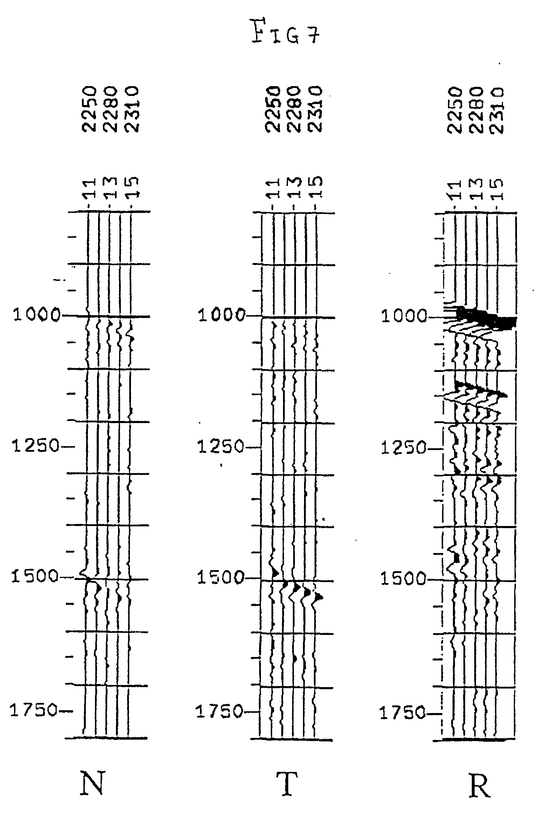

Dans une autre étape et après avoir constitué des collections émetteur commun des composantes des traces suivant les axes R, N, T, (figure 7), on traite chaque collection émetteur commun de traces R pour extraire le champ d'onde P descendant.

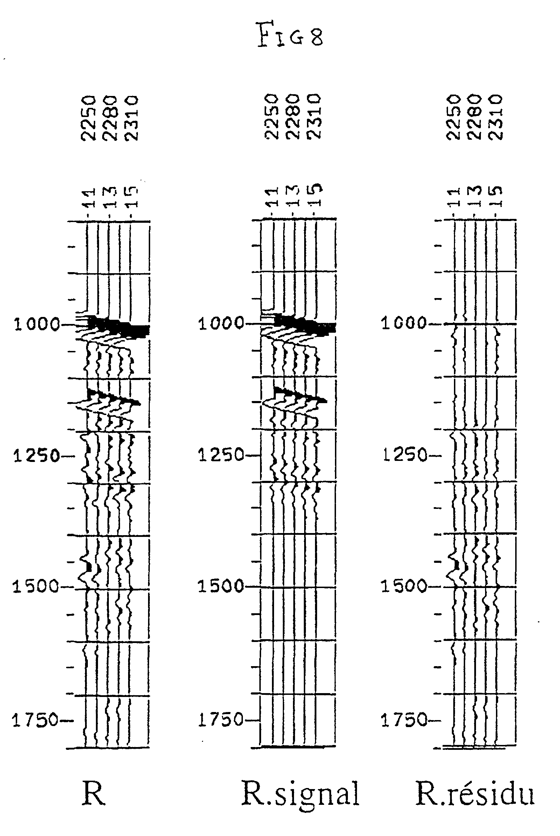

Pour cette opération, menée indépendamment sur chaque collection émetteur commun des traces R, on utilise la technique de filtrage matriciel (CEPHAG-IFP). Après horizontalisation des données à l'aide du pointé de la première arrivée, on applique cette technique sur toute la plage temps disponible ou sur une portion seulement (on peut ainsi éviter de faire intervenir un autre évènement descendant d'amplitude importante qui fausserait l'estimation - onde descendante S par exemple). La technique repose sur une décomposition des matrices interspectrales après moyennage fréquenciel et/ou spatial ; les paramètres de filtrage sont choisis de façon à permettre l'extraction du champ P descendant dans les meilleures conditions. Le moyennage fréquenciel est réalisé de façon à ne conserver que les premiers termes des fonctions d'intercorrélation, aucun moyennage spatial n'étant effectué. Pour chaque collection initiale R, la présente invention consiste à fournir, en sortie, une collection émetteur commun dénommée R signal, ces signaux constituant l'estimation du champ P descendant pour la position source considérée. Une collection émetteur commun R résidu ou R résiduelle est obtenue par différence entre la collection initiale R et l'estimation R signal (figure 8).

Les collections R signal ainsi estimées peuvent être utilisées ultérieurement pour le calcul des opérateurs anti-multiple.

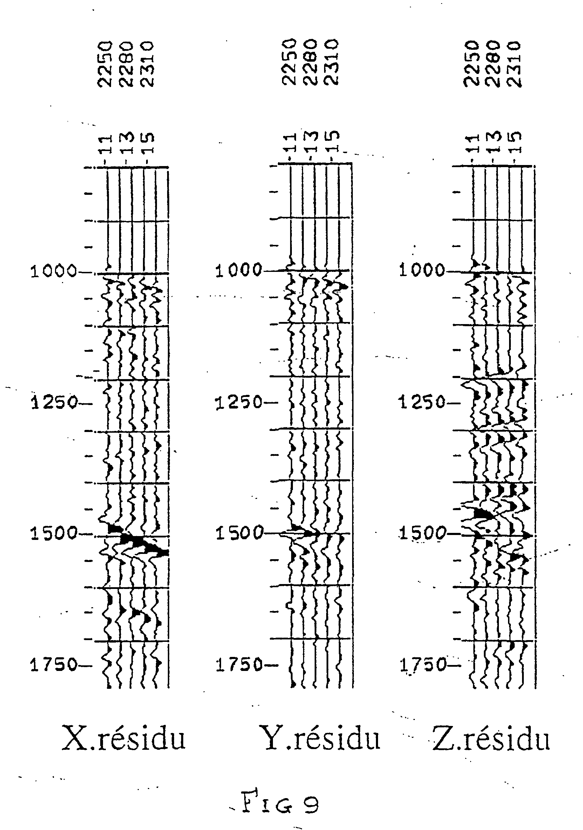

Les composantes R résiduelles, N et T sont projetées dans le repère fixe X, Y, Z, en utilisant les angles $\Phi_H$, $\Phi_V$ et $\delta$ ainsi que la déviation $\psi$ et l'azimut $\theta$ du puits. Les composantes ainsi obtenues sont dénommées X résidu, Y résidu et Z résidu (figure 9).

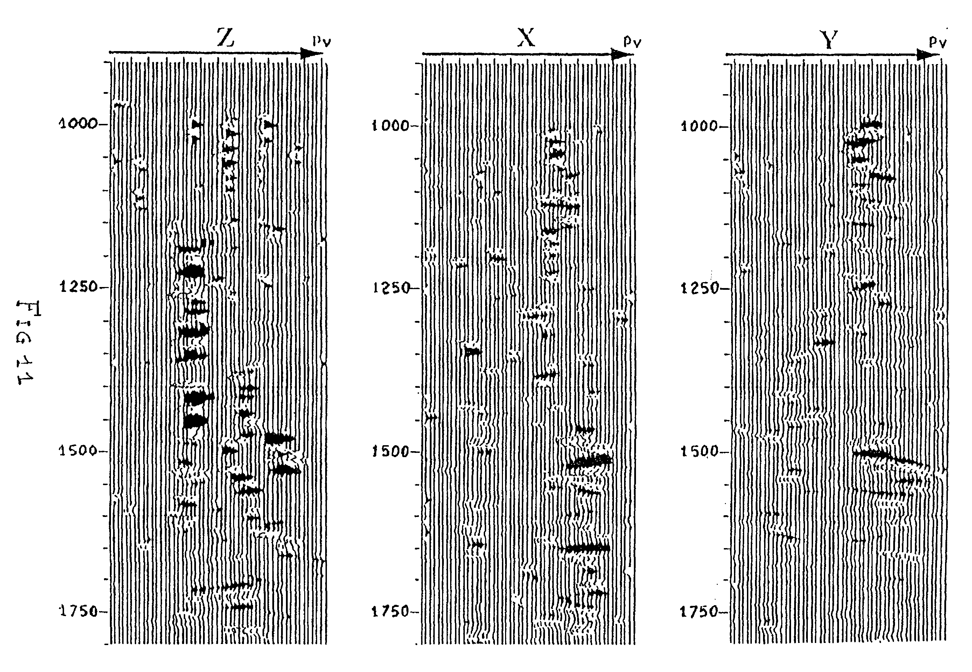

Pour chaque collection de traces émetteur commun, d'une part, et chaque composante X résidu, Y résidu et Z résidu, d'autre part, on procède à une décomposition dans un domaine ($\tau$, p) en utilisant une technique d'inversion. La figure 10 représente schématiquement une collection de traces résiduelles émetteur commun. Dans cette collection de traces résiduelles, on sélectionne une trace pivot 10 située à une profondeur z. On fait passer une droite 11 de pente p variable en chaque échantillon t de la trace pivot. On somme le long de ladite droite 11, pour chaque valeur de p, les amplitudes des évènements sismiques 12 situés aux intersections des traces 10 et 13 à 16 avec ladite droite 11. On reporte les sommes amplitudes A pour les temps et pentes correspondants dans le domaine $(\tau, p)$ dans lequel p représente les valeurs de la pente et $\tau$ le temps correspondant à t.

A partir des données de chacun des X résidu, Y résidu, Z résidu dans le domaine $(\tau, p)$, on réalise un sismogramme synthétique que l'on compare à la collection correspondante X résidu, Y résidu ou Z résidu et on procède à des itérations jusqu'à ce que le sismogramme synthétique soit acceptable par rapport aux données de la collection correspondante X résidu, Y résidu ou Z résidu.

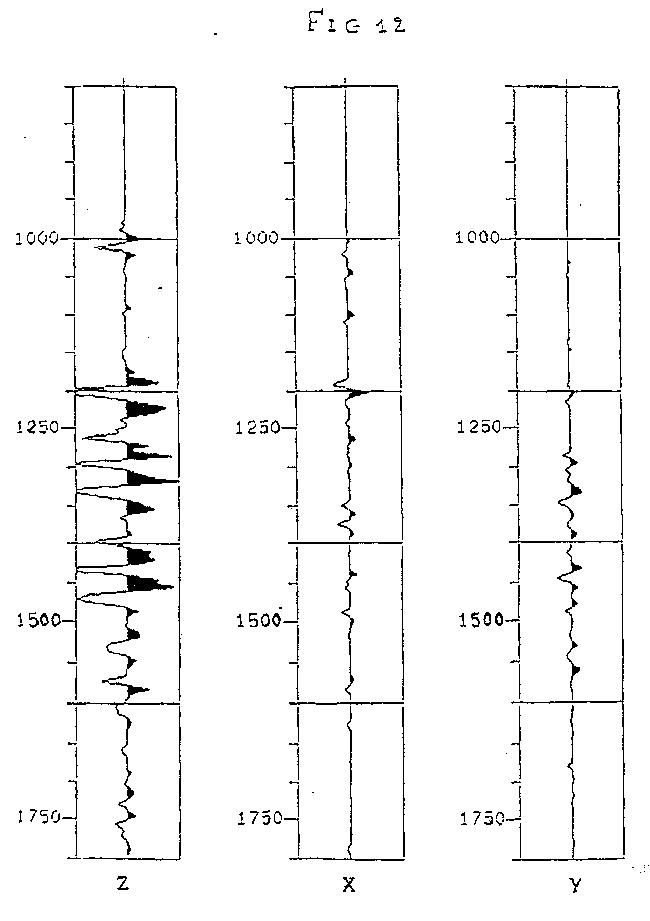

Pour éviter l'étalement des événements dans le domaine $(\tau, p)$, on applique dans le processus d'inversion une régularisation en norme $L_1$. La figure 11 représente la décomposition dans le domaine $(\tau, p)$ des collections de traces X résidu, Y résidu et Z résidu, de la figure 9. A partir de la décomposition dans le domaine $(\tau, p)$ des composantes X résidu, Y résidu et Z résidu, on calcule l'attribut polarisation $\zeta$ et l'attribut azimut $\gamma$ pour chaque valeur de p et $\tau$ et ce, sur une fenêtre glissante, en utilisant les éléments propres de la matrice variance et covariance incluse dans le logiciel précité SEISLINK. Ces attributs $\zeta$ ou polar$(\tau, p)$ et $\gamma$ ou azi$(\tau, p)$ sont utilisés pour calculer l'attribut $V_P$ (vitesse de l'onde P dans le milieu considéré), à l'aide de la formule suivante :

$$V_P(\tau,p) = \frac{(\cos[\text{polar}(\tau,p)]\cos\Psi + \sin[\text{polar}(\tau,p)]\sin\Psi\cos[\text{azi}(\tau,p)-\theta])}{p}$$

La lenteur apparente $p_z(\tau, p)$ par rapport à l'axe Z, de l'événement considéré peut être également évaluée par la formule :

$$p_z(\tau,p) = \frac{\cos[\text{polar}(\tau,p)]}{V_P(\tau,p)}$$

L'axe Z étant vertical, la lenteur $p_z(\tau, p)$ est utilisée pour discriminer les événements montants d'avec les évènements descendants.

La connaissance des attributs $V_P(\tau, p)$ et $p_z(\tau, p)$ permet de définir une sélection (mute) des évènements à conserver dans le domaine $(\tau, p)$. Il peut être utile à cette occasion d'utiliser la connaissance que l'on peut avoir de la vitesse géologique $V_P$ du milieu dans lequel est positionné le dispositif de réception.

On peut par exemple appliquer un mute (sélection) dans le domaine $(\tau, p)$ en utilisant les différents attributs précédemment décrits de façon à ne conserver que les événements P montants. Ces évènements sont ensuite synthétisés pour construire un sismogramme dans le domaine (X, Y, Z, t) représentatif du champ d'onde P montant. Sur la figure 12, on a représenté l'estimation des composantes X, Y et Z du champ d'onde P montant correspondant à la trace pivot 10 à laquelle on a appliqué la décomposition dans le domaine $(\tau, p)$.

Un traitement identique peut être effectué pour extraire les champs d'onde S descendant et montant.

Dans le cas où l'axe 7 du puits 4 est vertical ($\psi = 0$), on fixe arbitrairement la valeur $\theta$ à zéro.

La méthode selon l'invention est plus souple que les méthodes antérieures de filtrage optimal ou d'inversion paramétrique. Elle ne nécessite pas de pointé en-dehors de celui de la première arrivée et il n'est pas nécessaire de définir le nombre d'ondes à extraire ; de plus, il n'est pas nécessaire de déterminer les vitesses apparentes.

La méthode selon l'invention est par conséquent très simple d'utilisation et elle peut être utilisée telle quelle pour des acquisitions 3D. De plus, elle fournit une possibilité d'analyser les données et de contrôler le résultat de la séparation.

Bien entendu, il est possible de procéder à la décomposition $(\tau, p)$ des données représentées dans le système d'axes R, N, T. Il est également possible de calculer l'attribut polarisation $\zeta$ et l'attribut azimut $\gamma$ par rapport à ce repère R, N, T, ainsi que l'attribut $V_P$ dans le domaine $(\tau, p)$.

Les collections de traces R, N, T peuvent être remplacées par les collections C obtenues à partir des composantes V, $H_1$, $H_2$, les autres étapes de la méthode selon l'invention étant effectuées sur lesdites collections C de manière à obtenir les collections de traces C résiduelles nécessaires à la décomposition dans le domaine $(\tau, p)$.

De même, il est possible de projeter dans le système d'axes (X, Y, Z) les collections de traces C résiduelles et leurs collections de traces associées pour obtenir les collections de traces X résidu, Y résidu et Z résidu qui sont ensuite soumises à la décomposition dans le domaine $(\tau, p)$.

La présente invention peut être appliquée pour l'imagerie fine des réservoirs ainsi que pour la calibration des mesures AVO (mesure du coefficient de réflexion versus angle d'incidence). En effet, à partir de données walkaway, il est possible de mesurer les champs incident et réfléchi et par déconvolution, de faire une estimation possible du coefficient de réflexion, cette mesure étant d'autant plus exacte que le capteur est situé près de l'objectif étudié. Par ailleurs, les analyses de polarisation conduisent à la connaissance des angles d'incidence. On a de ce fait, tous les éléments pour évaluer sans biais le comportement du coefficient de réflexion vis-à-vis de l'angle d'incidence.

Enfin, la présente invention peut être utilisée pour la mesure de l'anisotropie au niveau de la ligne du dispositif de réception, ladite anisotropie pouvant être obtenue par une analyse conjointe de la vitesse apparente et de la polarisation de l'arrivée directe.

## Revendications

1. Méthode pour la séparation des ondes se propageant dans un milieu, du type consistant à :

   - générer des ondes dans le milieu successivement à partir de plusieurs positions d'au moins un émetteur et situées à la surface dudit milieu,
   - recevoir lesdites ondes sur au moins un récepteur susceptible d'occuper successivement au moins deux positions dans un puits foré dans le milieu, chaque récepteur comprenant trois capteurs orientés dans un premier système d'axes $(V, H_1, H_2)$, un desdits axes $(V)$ étant orienté suivant une direction déterminée, chaque capteur délivrant un signal qui est enregistré en fonction du temps sous forme d'une trace qui est repérée par les positions du couple émetteur-récepteur ayant produit ladite trace,
   - constituer des collections de traces C à émetteur commun $(z, t)$ à partir d'au moins un ensemble de traces V, $H_1$, $H_2$,

   **caractérisée en ce qu'**elle consiste, en outre, à

   a) extraire les premières arrivées C signal d'au moins une des collections de traces C,
   b) réaliser à partir de ladite collection de traces C une collection de traces C résiduelles dans laquelle chaque trace résiduelle est la différence entre la trace C et une estimation C signal,
   c) sélectionner dans la collection de traces C résiduelles une trace pivot située à une profondeur z,
   d) faire passer une droite de pente p variable en chaque point échantillonné de la trace pivot,
   e) sommer le long de ladite droite, pour chaque valeur de p, les amplitudes d'événements sismiques situés aux intersections des traces avec ladite droite,
   f) reporter les sommes amplitude pour les temps et pente correspondants dans un domaine $(\tau, p)$ dans lequel p représente les valeurs de ladite pente variant entre deux limites extrêmes et $\tau$ le temps,
   g) réaliser un sismogramme synthétique à partir des données du domaine $(\tau, p)$,
   h) comparer le sismogramme synthétique à la collection émetteur commun de traces C résiduelles,
   i) procéder à des itérations jusqu'à ce que le sismogramme synthétique soit acceptable par rapport aux données initiales de ladite collection émetteur commun des traces C résiduelles.

2. Méthode selon la revendication 1, **caractérisée en ce qu'**elle consiste en outre à

   - définir pour chaque couple de positions émetteur-récepteur un deuxième système d'axes (R, N, T) qui est calculé, par des moyens connus, à partir des composantes suivant les trois axes V, $H_1$, $H_2$, du vecteur déplacement correspondant à la première arrivée de l'onde d'intérêt et de la projection $H_{max}$ dudit vecteur déplacement dans le plan $H_1$, $H_2$, l'axe R étant situé dans le plan V, $H_{max}$, l'axe N étant perpendiculaire à l'axe R et situé dans le plan V, $H_{max}$ et l'axe T étant perpendiculaire au plan R, N,
   - produire des traces dans le système d'axes R, N, T en projetant les composantes des traces repérées suivant les axes V, $H_1$, $H_2$,
   - constituer les collections de traces (C) à émetteur commun $(z, t)$ à partir d'au moins les traces R,
   - extraire les premières arrivées R signal de la collection de traces R,
   - réaliser à partir de la collection de traces R une collection de traces R résiduelles dans laquelle chaque trace résiduelle est la différence entre la trace R et l'estimation R signal,
   - sélectionner dans la collection de traces R résiduelles une trace pivot située à une profondeur z,
   - effectuer les étapes d) à i) sur les traces R résiduelles.

3. Méthode selon la revendication 1 ou 2, **caractérisée en ce qu'**elle consiste en outre à :

   - définir un troisième système d'axes (X, Y, Z), fixe géographiquement,
   - déterminer dans le système d'axes (X, Y, Z) la déviation $\Psi$ et l'azimut $\theta$ du puits,
   - aligner l'axe V du premier système d'axes $(V, H_1, H_2)$ avec la direction du puits,
   - définir un vecteur $h_1$ perpendiculaire aux axes V et Z et contenu dans le plan $H_1$, $H_2$,
   - déterminer l'angle $\delta$ entre le vecteur $h_1$ et l'axe $H_1$.

**4.** Méthode selon la revendication 3, **caractérisée en ce qu'**elle consiste en outre à projeter dans le système fixe (X, Y, Z) la composante résiduelle (C ou R) et les composantes associées $H_1$ et $H_2$ ou N et T pour constituer des composantes résiduelles $X_r$ et $Y_r$, $Z_r$, sur les axes X, Y, Z la décomposition dans le domaine $(\tau, p)$ étant réalisée à partir des composantes de traces $X_r$ et $Y_r$, $Z_r$.

**5.** Méthode selon l'une des revendications 1 à 4, **caractérisée en ce qu'**elle consiste à calculer, par des moyens connus, pour chaque couple émetteur-récepteur, et dans le domaine $(\tau,p)$, un attribut angulaire polarisation $\zeta$ et un attribut angulaire azimut $\gamma$.

**6.** Méthode selon la revendication 5, **caractérisée en ce que** l'onde d'intérêt est l'onde P et **en ce qu'**on utilise les attributs polarisation $\zeta$, azimut $\gamma$, angle de déviation $\psi$ et azimut $\theta$ du puits ainsi que la pente p pour calculer l'attribut $(V_P)$ de la vitesse des ondes P dans le milieu.

**7.** Méthode selon la revendication 6, **caractérisée en ce que** l'attribut lenteur apparente $p_z$ par rapport à l'axe Z d'un événement sismique correspondant à des valeurs $\tau$ et p est calculé dans le domaine $(\tau, p)$ à partir des attributs polarisation $\zeta$ et $V_P$.

**8.** Méthode selon la revendication 7, **caractérisée en ce que** les attributs $p_z$ et $V_P$ sont utilisés pour opérer une sélection des événements à conserver dans le domaine $(\tau, p)$.

**9.** Méthode selon la revendication 8, **caractérisée en ce que** les événements conservés sont ceux liés aux ondes P montantes.

**10.** Méthode selon la revendication 1, **caractérisée en ce qu'**on construit une section synthétique, à partir des évènements conservés, représentative du champ d'onde P montant.

**11.** Méthode selon les revendications 1 à 5, **caractérisée en ce que** l'onde d'intérêt est l'onde S

**12.** Méthode selon la revendication 3, **caractérisée en ce que** lorsque l'axe du puits est vertical on fixe l'azimut dudit puits à une valeur nulle.


**Patentansprüche**

**1.** Verfahren zum Trennen von in einem Medium sich ausbreitenden Wellen, das von dem Typ ist, der darin besteht:

- Wellen in dem Medium ausgehend von mehreren Positionen wenigstens eines Senders, die sich an der Oberfläche des Mediums befinden, nacheinander zu erzeugen,
- die Wellen bei wenigstens einem Empfänger zu empfangen, der nacheinander wenigstens zwei Positionen in einem Bohrloch in dem Medium einnehmen kann, wobei jeder Empfänger drei Sensoren umfaßt, die in einem ersten Achsensystem (V, $H_1$, $H_2$) orientiert sind, wobei eine der Achsen (V) in einer bestimmten Richtung orientiert ist, wobei jeder Sender ein Signal liefert, das in Abhängigkeit von der Zeit in Form einer Spur aufgezeichnet wird, die durch die Positionen des Sender-Empfänger-Paars, das die Spur erzeugt hat, lokalisiert ist,
- Mengen von Spuren C, die einen gemeinsamen Sender (z, t) haben, anhand wenigstens einer Gesamtheit von Spuren (V, $H_1$, $H_2$) zu bilden,

   **dadurch gekennzeichnet, daß** es außerdem darin besteht

   a) Extrahieren der ersten ankommenden Signale C von wenigstens einer der Mengen von Spuren C,
   b) anhand der Menge von Spuren C Bilden einer Menge von Restspuren C, in der jede Restspur die Differenz zwischen der Spur C und einem geschätzten Signal C ist,
   c) Auswählen einer Mittelspur, die sich auf der Tiefe z befindet, aus der Menge von Restspuren C,
   d) Ziehen einer Geraden mit veränderlicher Steigung p durch jeden abgetasteten Punkt der Mittelspur,
   e) Summieren der Amplituden von seismischen Ereignissen, die sich an den Schnittpunkten der Spuren mit dieser Geraden befinden, längs der Geraden für jeden Wert p,
   f) Melden der entsprechenden Amplitudensummen für die Zeiten und die Steigung in einem Bereich $(\tau, p)$, worin p die Werte der zwischen zwei Extremgrenzen veränderlichen Steigung repräsentiert und $\tau$ die Zeit

repräsentiert,

g) Bilden eines synthetischen Seismogramms anhand der Daten des Bereichs (τ, p),

h) Vergleichen des synthetischen Seismogramms mit der Menge der Restspuren C, die einen gemeinsamen Sender besitzen,

i) Fortschreiten mit Iterationen, bis das synthetische Seismogramm in bezug auf die Anfangsdaten der Menge von Restspuren C, die einen gemeinsamen Sender besitzen, annehmbar ist.

**2.** Verfahren nach Anspruch 1, **dadurch gekennzeichnet, daß** es außerdem darin besteht:

- für jedes Paar von Sender-Empfänger-Positionen ein zweites Achsensystem (R, N, T) zu definieren, das durch bekannte Mittel anhand von Komponenten längs der drei Achsen V, $H_1$, $H_2$ des Verschiebungsvektors, der der ersten Ankunft der interessierenden Welle entspricht, und anhand der Projektion $H_{max}$ des Verschiebungsvektors in der Ebene $H_1$, $H_2$ berechnet wird, wobei sich die Achse R in der Ebene V, $H_{max}$ befindet, wobei die Achse N zu der Achse R senkrecht ist und sich in der Ebene V, $H_{max}$ befindet und die Achse T zu der Ebene R, N senkrecht ist,
- die Spuren in dem Achsensystem R, N, T durch Projizieren der Komponenten der lokalisierten Spuren auf die Achsen V, $H_1$, $H_2$ zu erzeugen,
- die Mengen von Spuren C, die einen gemeinsamen Sender (z, t) besitzen, wenigstens anhand der Spuren R zu bilden,
- die ersten eintreffenden Signale R der Menge von Spuren R zu extrahieren,
- anhand der Menge von Spuren R eine Menge von Restspuren R zu bilden, in denen jede Restspur die Differenz zwischen der Spur R und dem geschätzten Signal R ist,
- in der Menge von Restspuren R eine Mittelspur, die sich bei der Tiefe z befindet, auszuwählen,
- die Schritte d) bis i) für die Restspuren R auszuführen.

**3.** Verfahren nach Anspruch 1 oder 2, **dadurch gekennzeichnet, daß** es außerdem darin besteht:

- ein drittes Achsensystem (X, Y, Z), das geographisch fest ist, zu definieren,
- in dem Achsensystem (X, Y, Z) die Auslenkung Ψ und den Azimut θ der Löcher zu bestimmen,
- die Achse V des ersten Achsensystems (V, $H_1$, $H_2$) auf die Richtung der Löcher auszurichten,
- einen Vektor $h_1$ zu definieren, der zu den Achsen V und Z senkrecht und in der Ebene $H_1$, $H_2$ enthalten ist,
- den Winkel δ zwischen dem Vektor $h_1$ und der Achse $H_1$ zu bestimmen.

**4.** Verfahren nach Anspruch 3, **dadurch gekennzeichnet, daß** es außerdem darin besteht, in dem festen System (X, Y, Z) die Restkomponente (C oder R) und die zugeordneten Komponenten $H_1$ und $H_2$ bzw. N und T auf die Achsen X, Y, Z zu projizieren, um die Restkomponenten $X_r$ und $Y_r$, $Z_r$ zu bilden, wobei die Zerlegung in dem Bereich (τ, p) anhand der Spuren-Komponenten $X_r$ und $Y_r$, $Z_r$ ausgeführt wird.

**5.** Verfahren nach einem der Ansprüche 1 bis 4, **dadurch gekennzeichnet, daß** es darin besteht, durch bekannte Mittel für jedes Sender-Empfänger-Paar und in dem Bereich (τ, p) ein Polarisationswinkel-Attribut ζ und ein Azimutwinkel-Attribut γ zu berechnen.

**6.** Verfahren nach Anspruch 5, **dadurch gekennzeichnet, daß** die interessierende Welle die Welle P ist und daß das Polarisationsattribut ζ, das Azimutattribut γ, der Auslenkungswinkel ψ und der Azimutwinkel θ der Löcher sowie die Steigung p verwendet werden, um das Attribut ($V_P$) der Geschwindigkeit der Wellen P in dem Medium zu berechnen.

**7.** Verfahren nach Anspruch 6, **dadurch gekennzeichnet**, das erkennbare Trägheitsattribut $p_z$ in bezug auf die Achse Z eines seismischen Ereignisses, das den Werten τ und p entspricht, in dem Bereich (τ, p) anhand der Polarisationsattribute ζ und $V_P$ berechnet wird.

**8.** Verfahren nach Anspruch 7, **dadurch gekennzeichnet, daß** die Attribute $p_z$ und $V_P$ dazu verwendet werden, eine Auswahl von Ereignissen, die in dem Bereich (τ, p) beibehalten werden sollen, zu handhaben.

**9.** Verfahren nach Anspruch 8, **dadurch gekennzeichnet, daß** die beibehaltenen Ereignisse jene sind, die mit den aufsteigenden Wellen P in Beziehung stehen.

**10.** Verfahren nach Anspruch 1, **dadurch gekennzeichnet, daß** anhand der beibehaltenen Ereignisse ein synthetischer Schnitt konstruiert wird, der ein aufsteigendes Wellenfeld P repräsentiert.

**11.** Verfahren nach den Ansprüchen 1 bis 5, **dadurch gekennzeichnet, daß** die interessierende Welle die Welle S ist.

**12.** Verfahren nach Anspruch 3, **dadurch gekennzeichnet, daß** dann, wenn die Achse des Lochs vertikal ist, der Azimut des Lochs auf einen Wert null festgelegt wird.

**Claims**

**1.** A method for separating waves propagating in a medium, of the type consisting in:

- generating waves in the medium successively from several positions of at least one source which are located at the surface of said medium,
- receiving said waves at at least one receiver that can successively occupy at least two positions in a borehole drilled in the medium, each receiver comprising three sensors which are oriented in a first system of axes (V, $H_1$, $H_2$), one of said axes (V) being oriented in a specified direction, each sensor delivering a signal which is recorded as a function of time in the form of a trace which is identified by the positions of the source/receiver pair that produced said trace,
- forming collections of traces C with a common source (z, t) from at least one set of traces V, $H_1$, $H_2$,

which method further consists in

a) extracting the first C signal arrivals of at least one of the C trace collections,
b) on the basis of said C trace collection, making a collection of residual C traces in which each residual trace is the difference between the C trace and a C signal estimate,
c) from the collection of residual C traces, selecting a pivot trace located at a depth z,
d) plotting a straight line of variable slope p at each sampled point of the pivot trace,
e) along said straight line, for each value of p, summing the amplitudes of seismic events located at the intersections of the traces with said straight line,
f) transferring the amplitude sums for the corresponding time and slope into a domain $(\tau, p)$ in which p represents the values of said slope, lying between two extreme limits, and $\tau$ represents time,
g) making a synthetic seismogram on the basis of the data in the domain $(\tau, p)$,
h) comparing the synthetic seismogram with the common-source collection of residual C traces,
i) performing iterations until the synthetic seismogram is acceptable in terms of the initial data of said common-source collection of the residual C traces.

**2.** The method as claimed in claim 1, which further consists in:

- for each pair of source/receiver positions, defining a second system of axes (R, N, T) which is calculated, by known means, from the components on the three axes V, $H_1$, $H_2$ of the displacement vector corresponding to the first arrival of the wave of interest and from the projection $H_{max}$ of said displacement vector into the plane $H_1$, $H_2$, the axis R being located in the plane V, $H_{max}$, the axis N being perpendicular to the axis R and located in the plane V, $H_{max}$ and the axis T being perpendicular to the plane R, N,
- producing traces in the system of axes R, N, T by projecting the components of the traces identified along the axes V, $H_1$, $H_2$,
- forming the collections of traces (C) with common source (z, t) from at least the R traces,
- extracting the first R signal arrivals of the R trace collection,
- on the basis of the R trace collection, making a collection of residual R traces in which each residual trace is the difference between the R trace and the R signal estimate,
- from the collection of residual R traces, selecting a pivot trace located at a depth z,
- performing steps d) to i) on the residual R traces.

**3.** The method as claimed in claim 1 or 2, which further consists in:

- defining a geographically fixed third system of axes (X, Y, Z),
- in the system of axes (X, Y, Z), determining the deviation $\Psi$ and the azimuth $\theta$ of the borehole,
- aligning the axis V of the first system of axes (V, $H_1$, $H_2$) with the direction of the borehole,

- defining a vector $h_1$ which is perpendicular to the axes V and Z and is contained in the plane $H_1$, $H_2$,
- determining the angle $\delta$ between the vector $h_1$ and the axis $H_1$.

4. The method as claimed in claim 3, which further consists in projecting into the fixed system (X, Y, Z) the residual component (C or R) and the associated components $H_1$ and $H_2$ or N and T to form residual components $X_r$ and $Y_r$, $Z_r$ on the axes X, Y, Z, the decomposition in the domain ($\tau$, p) being carried out on the basis of the trace components $X_r$ and $Y_r$, $Z_r$.

5. The method as claimed in one of claims 1 to 4, which consists in using known means to calculate, for each source/receiver pair and in the domain ($\tau$, p), a polarization angular attribute $\zeta$ and an azimuth angular attribute $\gamma$.

6. The method as claimed in claim 5, wherein the wave of interest is the P-wave, and the polarization attribute $\zeta$, the azimuth attribute $\gamma$, the angle of deviation $\psi$ and the azimuth $\theta$ of the borehole, as well as the slope p, are used to calculate the velocity attribute ($V_p$) of the P-waves in the medium.

7. The method as claimed in claim 6, wherein the raypath parameter $p_z$ relative to the axis Z of a seismic event corresponding to values $\tau$ and p is calculated in the domain ($\tau$, p) from the polarization attribute $\zeta$ and the $V_p$ attribute.

8. The method as claimed in claim 7, wherein the attributes $p_z$ and $V_p$ are used to make a selection of the events to be kept in the domain ($\tau$, p).

9. The method as claimed in claim 8, wherein the events that are kept are those connected with the upgoing P-waves.

10. The method as claimed in claim 1, wherein a synthetic section representing the upgoing P-wave field is constructed from the events that are kept.

11. The method as claimed in claims 1 to 5, wherein the wave of interest is the S-wave.

12. The method as claimed in claim 3, wherein, when the axis of the borehole is vertical, the azimuth of said borehole is fixed at a zero value.

FIG 1

FIG 3

FIG 4

FIG 2

FIG 5

FIG 10

14

FIG 6

H1            H2            V

FIG 7

FIG 8

R     R.signal     R.résidu

X.résidu    Y.résidu    Z.résidu

FIG 9

EP 0 909 961 B1

FIG 11

19

FIG 12